# EUROPÄISCHE PATENTANMELDUNG

(11) **EP 0 908 261 A1**
(43) Veröffentlichungstag der Anmeldung: **14.04.1999**
(21) Anmeldenummer: 98118142.3
(22) Anmeldetag: 24.09.1998
(51) Int. Cl.: B23K 9/028

(54) **Schweisskopf**

(30) Priorität: 06.10.1997 DE 29717784 U
(71) Anmelder: Tesch, Klaus, D-22301 Hamburg (DE)
(72) Erfinder: Tesch, Klaus, D-22301 Hamburg (DE)
(74) Vertreter: Glawe, Delfs, Moll & Partner

(57) **Zusammenfassung**

Schweißkopf zum Anbringen von Schweißnähten am Umfang im wesentlichen zylindrischer Werkstücke (4), mit wenigstens zwei um die Werkstücke (4) schließbaren Werkzeugkörpersegmenten (1, 2), die Spanneinrichtungen zum Spannen und Positionieren der Werkstücke aufweisen, und mit einem relativ zum Schweißkopf drehend antreibbaren und dabei die Werkstücke umlaufenden Schweißwerkzeug (9), das an einem den Werkstückumfang wenigstens teilweise umschließenden Drehkörper (6) angeordnet ist, wobei er eine flexible, in ihrer Längsrichtung verschiebbare, um das Werkstück (4) herumwickelbare Führung (10) für einen darin geführten Schweißdraht (11) aufweist, deren eines Ende in der Nähe der Schweißelektrode (9) am Drehkörper (6) mit einer Halterung (12) befestigt ist, und daß der Schweißdraht (11) mit einer Vorschubeinrichtung (16) versehen ist.

## Beschreibung

Die Erfindung betrifft einen geschlossenen Schweißkopf zum Anbringen von Schweißnähten am Umfang im wesentlichen zylindrischer Werkstücke, mit wenigstens zwei um die Werkstücke schließbaren Werkzeugkörpersegmenten, die Spanneinrichtungen zum Spannen und Positionieren der Werkstücke aufweisen, und mit einem relativ zum Schweißkopf drehend antreibbaren und dabei die Werkstücke umlaufenden Schweißwerkzeug, das an einem den Werkstückumfang wenigstens teilweise umschließenden Drehkörper angeordnet ist.

Ein solcher Schweißkopf bildet um die beiden miteinander zu verschweißenden im wesentlichen zylindrischen Werkstücke eine geschlossene Kavität und ist dazu geeignet, diese insbesondere auch unter Schutzgasathmosphäre zu verschweißen (EP 0 612 581 B1). Dabei besteht der Drehkörper in Form eines Drehrings wenigstens aus zwei Ringsegmenten, so daß der Schweißkopf geöffnet werden kann, um die zu verschweißenden Rohre einzulegen oder herauszunehmen. Bei einem anderen bekannten Schweißkopf ist der Drehkörper im wesentlichen U-förmig, was beim Antrieb für die Drehbewegung mehrere Antriebsräder erfordert. In beiden Fällen wandert aber die Schweißelektrode, die z.B. aus Wolfram besteht, um die Verbindungsstelle herum, so daß durch den an Werkstück und Schweißelektrode gelegten Schweißstrom die beiden Werkstücke unter teilweisem Aufschmelzen im Verbindungsbereich miteinander verschweißt werden. Bei vielen Materialien muß beim Schweißen Zusatzmaterial hinzugegeben werden. Dieses Zusatzmaterial führt man dabei in Form eines Schweißdrahtes zu, der durch eine Vorschubeinrichtung immer so weit bewegt wird, daß der Verbrauch an Material kompensiert wird. Diese Art von Schweißen mit einem Zusatzmaterial ist aber bei den bekannten Schweißköpfen nicht möglich.

Die Aufgabe der Erfindung besteht in der Schaffung eines Schweißkopfs der eingangs genannten Art, bei dem auch innerhalb des geschlossenen Schweißkopfes mit Zusatzmaterial geschweißt werden kann.

Die erfindungsgemäße Lösung besteht darin, daß er im Innern des Schweißkopfes eine flexible, in ihrer Längsrichtung verschiebbare, um das Werkstück herumwickelbare Führung für einen darin geführten Schweißdraht aufweist, deren eines Ende in der Nähe der Schweißelektrode am Drehkörper mit einer Halterung befestigt ist, und daß eine Vorschubeinrichtung für den Schweißdraht vorgesehen ist.

Der Drehkörper wird zunächst so angetrieben, daß der Schweißdraht und seine Führung einmal um die zu verbindenden Werkstücke herumgewickelt ist. Anschließend wird dann der Schweißvorgang begonnen, indem der Strom angelegt wird, und der Drehkörper wird in der entgegengesetzten Richtung bewegt. Dabei wird durch den Vorschub immer soviel Schweißdraht zugeführt, wie er aufgeschmolzen und durch den Schweißvorgang verbraucht wird. Durch die Halterung am Ende der Führung wird das Ende des Schweißdrahts immer in der Nähe der Schweißstelle gehalten. Die Führung wird dabei laufend von der Schweißstelle weggeschoben, so daß sie den Schweißvorgang nicht behindert.

Der Drehkörper kann wie gesagt im wesentlichen U-förmig sein. Als besonders vorteilhaft hat es sich aber erwiesen, wenn er ringförmig ist und aus wenigstens zwei Ringsegmenten zusammengesetzt ist. Zweckmäßigerweise ist je eines der Ringsegmente in einem der Werkzeugkörpersegmente des Schweißkopfes angeordnet, die das zu bearbeitende Werkstück umschließen und spannen. Dies hat den Vorteil, daß beim Öffnen des Schweißkopfes jedes Ringsegment in einem Werkzeugsegment bleibt, so daß das Werkstück problemlos eingesetzt und entnommen werden kann.

Bei einer zweckmäßigen Ausführungsform sind die Werkzeugkörpersegmente aufklappbar durch ein Schwenkgelenk miteinander verbunden, das zusätzlich eine relative Verschieblichkeit der Werkzeugkörpersegmente zueinander quer zur Klappachse erlaubt. Damit ist die Klappbewegung eines Werkzeugkörpersegments nicht nur auf eine Kreisbogenbahn begrenzt, sondern es kann variabel auf mehreren Kreisbogenbahnen bewegt werden. Zweckmäßigerweise ist die Verschieblichkeit abhängig von dem Öffnungswinkel zwischen den Werkzeugkörpersegmenten und ist in geschlossener Stellung nur noch sehr gering oder gar nicht mehr vorhanden. Damit wird einerseits eine spielfreie Befestigung des zu bearbeitenden Werkstücks in dem Schweißkopf erreicht und zum anderen durch das entstehende Spiel bei zumindest teilgeöffnetem Werkzeug der Gefahr eines Verklemmens zwischen Werkzeugkörpersegment und Werkstück beim Öffnen oder Schließen entgegengewirkt; dies ist insbesondere kurz vor Erreichen der Schließstellung für ein sicheres Einspannen von Bedeutung. Dies ermöglicht eine einfache Handhabung, insbesondere in den Fällen, in denen beispielsweise zum Ausgleich von Toleranzen, Oberflächenrauhigkeit oder ungleichmäßiger Wärmedehnung eine Bewegung eines Werkzeugkörpersegments radial zur Klappachse erforderlich ist. Eine zweckmäßige Ausführungsform des Schwenkgelenks ist als ein Doppelgelenk mit Lasche ausgeführt. Die Lasche ist drehbar mit je einem der beiden Werkzeugkörpersegmente verbunden. Dank seiner zwei Drehachsen ermöglicht es dieses Doppelgelenk, daß durch ein Kippen der Lasche in der Ebene der Drehbewegung eine RelativBewegung der Werkzeugkörpersegmente quer zu der Klappachse ermöglicht ist.

Der Drehkörper kann besonders einfach und zuverlässig angetrieben werden, wenn er mit einem am Außenumfang angeordneten Zahnkranz ausgebildet ist, der mit einem entsprechenden Antriebszahnrad zusammenwirkt. Die in Längsrichtung verschiebbare Führung kann insbesondere ein flexibler Schlauch sein, was eine besonders zweckmäßige und kostengünstige Ausführungsform ist. Der Schlauch kann dabei PTFE-beschichtet sein oder aus PTFE bestehen, da er dann besonders gut gleiten kann und insbesondere auch der Schweißdraht reibungsarm in ihm vorgeschoben werden kann.

Die Führung wird bei der Rückwärtsbewegung des Drehkörpers aus dem Schweißkopf herausgeschoben. Wenn sie am anderen Ende am Schweißkopf befestigt ist, bildet sie eine Schlaufe, die sich in diesem Falle erweitert und beim Umwickeln des Werkstücks verkleinert.

Zweckmäßigerweise wird die Führung seitlich am Drehkörper auf einer geeigneten Vorrichtung aufgewickelt und auf Abstand zur Werkstückoberfläche gehalten.

Wenn die Halterung für das Ende der Führung verstellbar ist, kann eine Einstellung auf unterschiedliche Werkstückdurchmesser erfolgen. Wenn die Führung durch Rollen geführt ist, kann sie besonders reibungsarm gleiten, wenn sie aus dem Schweißkopf wieder herausgestoßen wird.

Die Erfindung wird im folgenden anhand einer vorteilhaften Ausführungsform unter Bezugnahme auf die beigefügten Zeichnungen beschrieben, die schematisch den Schweißkopf der Erfindung zeigen. Es zeigen dabei:
Fig. 1 eine Detailansicht des Schweißkopfs; und
Fig. 2 eine Gesamtansicht.

Der Schweißkopf der Erfindung besteht aus zwei Werkzeugkörpersegmenten 1, 2, die über ein Gelenk 3 gelenkig miteinander verbunden sind, so daß das Werkstück bzw. die Werkstücke 4 eingesetzt und insbesondere nach dem Schweißen wieder entnommen werden können. Das Gelenk 3 weist eine Verbindungslasche 33 auf, die mittels nicht dargestellter Bolzen in den Öffnungen 31 und 32 der Werkzeugkörpersegmente 1 bzw. 2 klappbar gelagert ist. Die Klappachse ist parallel zu der Achse der Bolzen bzw. Öffnungen 31, 32; sie ist bei dem dargestellten Ausführungsbeispiel senkrecht zur Zeichenebene. In dem Übergang zwischen der Teilungsfläche und dem äußeren Bogen weisen die Werkzeugkörpersegmente 1, 2 in dem Bereich des Gelenks 3 Abrundungen 21, 22 auf, deren Radius von dem Abstand der Mittelpunkte der Öffnungen 31, 32 von dem Außenrand der Werkzeugkörpersegmente 1, 2 bestimmt ist; vorzugsweise beträgt er das 0,8 bis 1,2-fache des Abstandes. Bei zumindest teilgeöffnetem Werkzeugkörper kann dann das obere Werkzeugkörpersegment 1 auf einer durch die Lasche 33 bestimmten Bahn mit einer quer zur Klappachse gerichteten Bewegungskomponente bewegt werden.

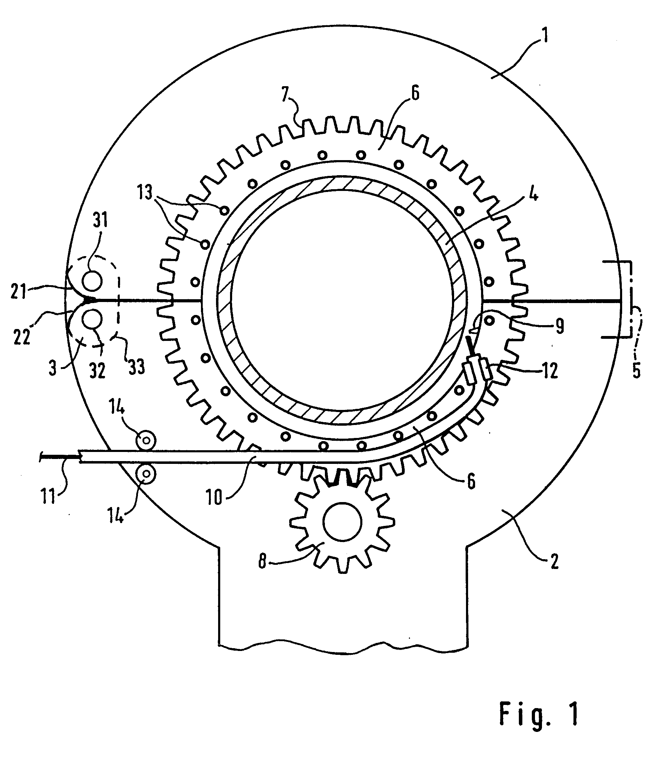

Die beiden Werkzeugkörpersegmente 1, 2 werden im geschlossenen Zustand, der in Fig. 1 gezeigt ist, durch einen schematisch bei 5 angedeuteten Verschluß zusammengehalten. Durch die Segmente 1, 2 wird das Werkstück 4 bzw. werden die Werkstücke 4 eingespannt.

Im Schweißkopf bzw. den Werkzeugkörpersegmenten 1, 2, ist drehbar ein aus zwei Hälften bestehender Drehkörper 6 angebracht, der außen mit einer Verzahnung 7 versehen ist, die durch ein Antriebszahnrad 8 angetrieben wird, so daß sich der Drehkörper 6 in nicht gezeigten Führungen der Werkzeugkörpersegmente 1, 2 dreht. Am in der Figur unteren Drehkörperteil 6 ist an einem Ende eine Schweißelektrode 9 z.B. aus Wolfram angebracht, mit der die Schweißnaht durch Anlegen einer Schweißspannung zwischen Elektrode 9 und Werkstück 4 um das Werkstück 4 herum gebildet werden kann, wenn die Drehkörper 6 dabei um 360° um das Werkstück 4 herumgefahren werden.

Erfindungsgemäß ist nun eine Führung 10 für einen Schweißdraht 11 vorgesehen, die am Drehkörper 6 mit einer verstellbaren Halterung 12 an einem Ende befestigt ist, so daß der Schweißdraht 11 bzw. sein vorderes Ende in der Nähe der Elektrode 9 gehalten werden kann.

Im wesentlichen ausgehend von der Stellung in Fig. 1 wird der Drehkörper 6 vor Beginn des Schweißvorganges um 360° im Gegenuhrzeigersinn gedreht, so daß die Führung 10 und der Schweißdraht 11 einmal um das Werkstück 4 herumgelegt werden.

Sie werden dabei durch Distanzbuchsen 13 am Drehkörper 6 in einem Abstand vom Werkstück 4 und der Schweißstelle gehalten. Anschließend wird dann der Schweißstrom eingeschaltet und der Drehkörper 6 im Uhrzeigersinn bewegt. Gleichzeitig wird der Schweißdraht 11 so weit vorgeschoben, wie Materialmenge zum Schweißen benötigt wird. Bei dieser Drehung des Drehkörpers 6 im Uhrzeigersinn wird die Führung 10 dabei gleitend aus dem unteren Werkzeugkörpersegment 2 herausgeschoben, da sie in ihrer Längsrichtung verschiebbar ist und z.B. durch Rollen 14 gelagert ist.

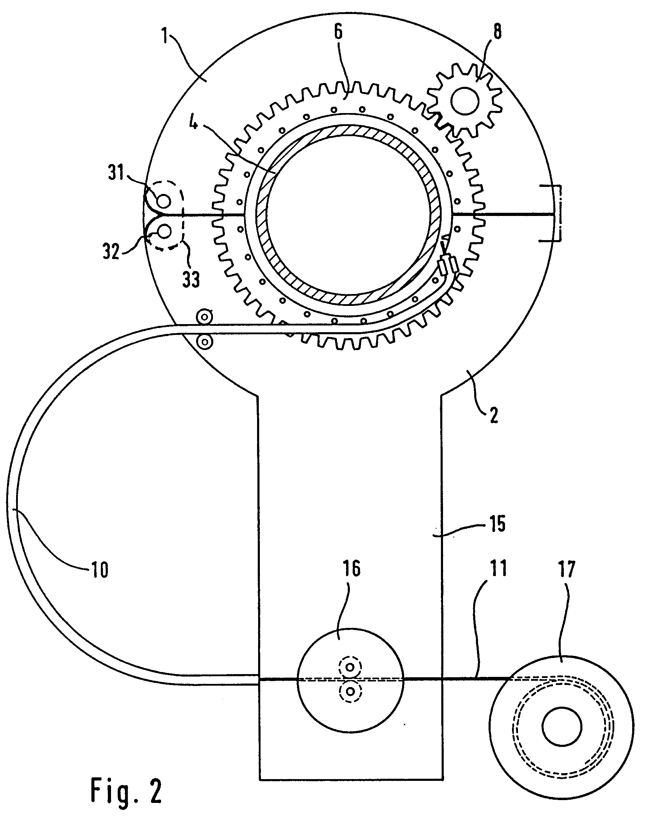

Wie dies in Fig. 2 gezeigt ist, ist das andere Ende der Führung 10 am Schaft 15 des Schweißkopfes befestigt, so daß die flexible Führung 10 eine Schlaufe bildet, die sich beim Herumwickeln um das Werkstück 4 verkleinert und beim Schweißvorgang wieder vergrößert. Im Schaft 15 ist eine an sich bekannte Vorschubeinrichtung für den Schweißdraht 11 vorgesehen, die bei 16 schematisch angedeutet ist. Der Schweißdraht 11 ist schließlich auf einer Vorratsrolle 17 aufgewickelt.

## Patentansprüche

1. Geschlossener Schweißkopf zum Anbringen von Schweißnähten am Umfang im wesentlichen zylindrischer Werkstücke (4), mit wenigstens zwei um die Werkstücke (4) schließbaren Werkzeugkörpersegmenten (1, 2), die Spanneinrichtungen zum Spannen und Positionieren der Werkstücke aufweisen, und mit einem relativ zum Schweißkopf drehend antreibbaren und dabei die Werkstücke umlaufenden Schweißwerkzeug (9), das an einem den Werkstückumfang wenigstens teilweise umschließenden Drehkörper (6) angeordnet ist, dadurch gekennzeichnet, daß er im Inneren des Schweißkopfes eine flexible, in ihrer Längsrichtung verschiebbare, um das Werkstück (4) herumwickelbare Führung (10) für einen darin geführten Schweißdraht (11) aufweist, deren eines Ende in der Nähe der Schweißelektrode (9) am Drehkörper (6) mit einer Halterung (12) befestigt ist, und daß eine Vorschubeinrichtung (16) für den Schweißdraht (11) vorgesehen ist.

2. Schweißkopf nach Anspruch 1, dadurch gekennzeichnet, daß der Drehkörper (6) ringförmig aus wenigstens zwei Ringsegmenten zusammengesetzt ist.

3. Schweißkopf nach Anspruch 2, dadurch gekennzeichnet, daß die Werkzeugkörpersegmente (1, 2) durch ein Schwenkgelenk (3) klappbar verbunden und quer zur Klappachse relativ zueinander verschieblich sind.

4. Schweißkopf nach Anspruch 3, dadurch gekennzeichnet, daß das Schwenkgelenk (3) als ein Doppelgelenk mit Lasche (33) ausgebildet ist.

5. Schweißkopf nach Anspruch 1 bis 4, dadurch gekennzeichnet, daß der Drehkörper (6) mit einem am Außenumfang angeordneten Zahnkranz (7) ausgebildet ist.

6. Schweißkopf nach einem der Ansprüche 1 bis 5, dadurch gekennzeichnet, daß die Führung (10) ein flexibler Schlauch ist.

7. Schweißkopf nach Anspruch 6, dadurch gekennzeichnet, daß der Schlauch (10) von innen, vorzugsweise mit PTFE, gleitbeschichtet ist.

8. Schweißkopf nach Anspruch 6, dadurch gekennzeichnet, daß der Schlauch (10) aus einem Isolationswerkstoff, vorzugsweise aus PTFE besteht.

9. Schweißkopf nach einem der Ansprüche 1 bis 8, dadurch gekennzeichnet, daß die Führung (10) am anderen Ende am Schweißkopf befestigt ist.

10. Schweißkopf nach einem der Ansprüche 1 bis 9, dadurch gekennzeichnet, daß die Führung (10) seitlich vom Drehkörper (6) auch eine geeignete Vorrichtung (13) aufgewickelt und auf Abstand zur Werkstückoberfläche gehalten wird.

11. Schweißkopf nach einem der Ansprüche 1 bis 10, dadurch gekennzeichnet, daß die Halterung (12) verstellbar ist.

12. Schweißkopf nach einem der Ansprüche 1 bis 11, dadurch gekennzeichnet, daß die Führung durch Rollen geführt ist.
